# EUROPÄISCHE PATENTSCHRIFT

(11) **EP 2 118 997 B1**
(45) Veröffentlichungstag und Bekanntmachung des Hinweises auf die Patenterteilung: **19.01.2011**
(21) Anmeldenummer: 08708869.6
(22) Anmeldetag: 11.02.2008
(51) Int. Cl.: H02P 9/48, F01D 15/10, H02P 9/10

(54) **VERFAHREN ZUM BETRIEB EINER KRAFTWERKSANLAGE**
METHOD FOR OPERATING A POWER PLANT
PROCÉDÉ DE FONCTIONNEMENT D'UNE CENTRALE ÉLECTRIQUE

(30) Priorität: 14.02.2007 DE 102007007913
(43) Veröffentlichungstag der Anmeldung: 18.11.2009
(73) Patentinhaber: Alstom Technology Ltd, 5400 Baden (CH)
(72) Erfinder: HOFFMANN, Jürgen, 5417 Untersiggenthal (CH); MEINDL, Thomas, 5416 Kirchdorf (CH)
(86) Internationale Anmeldenummer: PCT/EP2008/051617
(87) Internationale Veröffentlichungsnummer: WO 2008/098902

(56) Entgegenhaltungen:
- JP-A- 2002 227 660
- US-A1- 2002 079 706
- US-A1- 2003 189 339
- US-A1- 2004 264 089

## Beschreibung

### TECHNISCHES GEBIET

Die vorliegende Erfindung bezieht sich auf das Gebiet der Kraftwerkstechnik. Sie betrifft ein Verfahren zum Betrieb einer Kraftwerksanlage gemäss dem Oberbegriff des Anspruchs 1.

### STAND DER TECHNIK

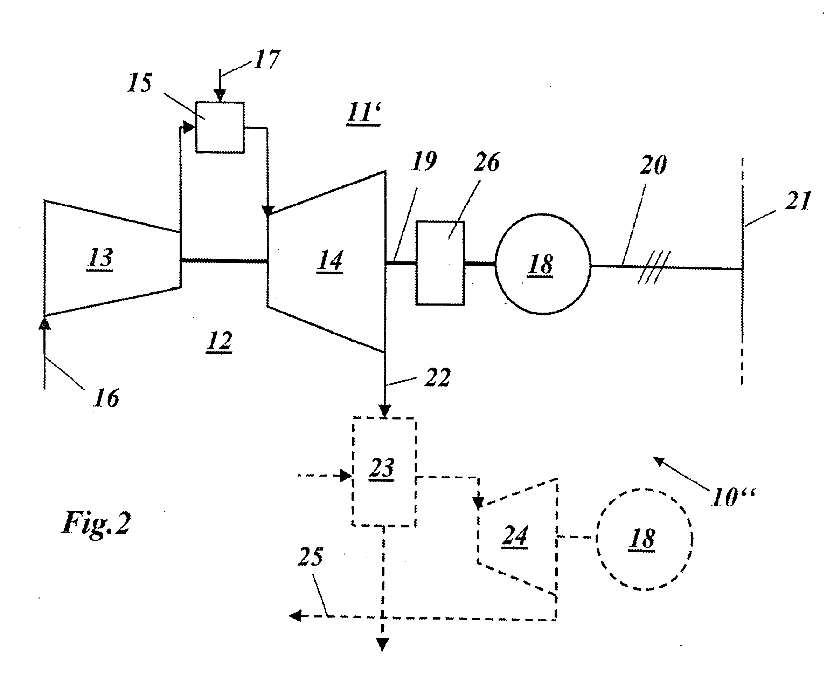

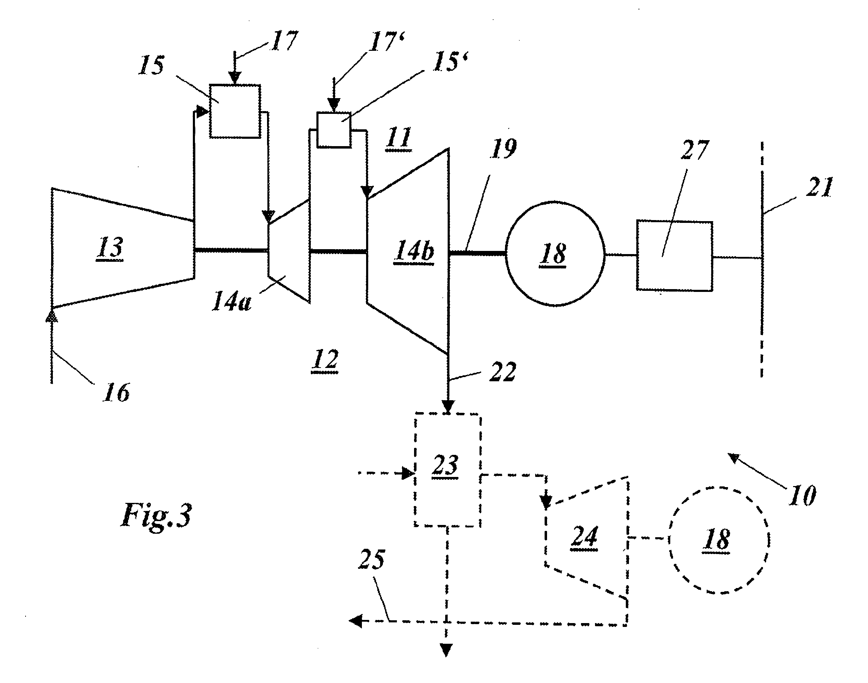

Grosse Kraftwerksanlagen mit Leistungen im Bereich von mehr als 100 MW, bei denen ein Strom erzeugender Generator von einer Gas- und/oder Dampfturbine angetrieben wird und die erzeugte elektrische Leistung in ein Netz mit vorgegebener Netzfrequenz (z.B. 50 oder 60 Hz) einspeist, haben üblicherweise eine feste Kopplung zwischen der (mechanischen oder aerodynamischen) Drehzahl der Turbine und der Netzfrequenz. Der Ausgang des Generators ist dabei über eine Verbindung frequenzgekoppelt mit dem Netz verbunden, während er von der Turbine entweder direkt (1-Wellenanlage) oder über ein mechanisches Getriebe drehzahlgekoppelt angetrieben wird. Derartige Konfigurationen von Kraftwerksanlagen sind in den Fig. 2 und 3 stark vereinfacht wiedergegeben. Mittels Getriebe sind nur feste Übersetzungsverhältnisse zwischen Netzfrequenz und Turbine realisierbar. Es sind aber auch Lösungen denkbar, bei denen der Generator von einer Nutzturbine angetrieben wird, die mit einer von der eigentlichen Gasturbine abweichenden Drehzahl gefahren werden kann.

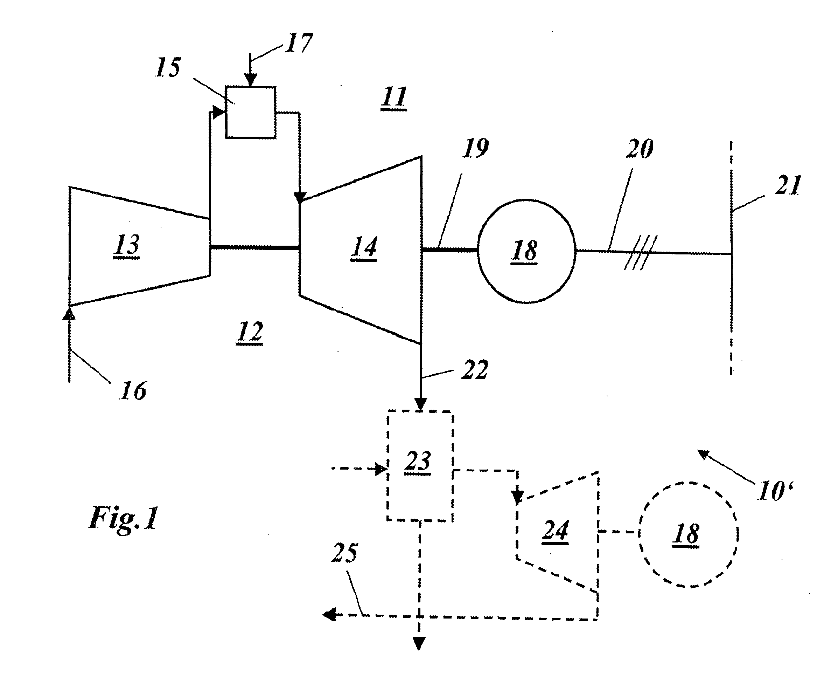

Fig. 1 zeigt in einer stark vereinfachten Darstellung eine Kraftwerksanlage 10' bekannter Art, die mittels einer Gasturbine 12 mit angekoppeltem Generator 18 Strom erzeugt und in ein Netz 21 einspeist. Die Gasturbine 12 und der Generator 18 sind durch eine gemeinsame Welle 19 verbunden und bilden einen 1-Wellen-Turbinenstrang 11. Die Gasturbine umfasst im einfachsten Fall einen Verdichter 13, der über einen Lufteinlass 16 Verbrennungsluft ansaugt und verdichtet. Der Verdichter 13 kann aus mehreren hintereinander geschalteten Teilverdichtern zusammengesetzt sein, die auf steigendem Druckniveau arbeiten und ggf. eine Zwischenkühlung der verdichteten Luft ermöglichen. Die im Verdichter 13 verdichtete Verbrennungsluft gelangt in eine Brennkammer 15, in die über eine Brennstoffzufuhr 17 flüssiger (z.B. Öl) oder gasförmiger (z.B. Erdgas) Brennstoff eingedüst und unter Verbrauch von Verbrennungsluft verbrannt wird.

Die aus der Brennkammer 15 austretenden heissen Gase werden in einer nachfolgenden Turbine 14 unter Arbeitsleistung entspannt und treiben so den Verdichter 13 und den angeflanschten Generator 18 an. Das beim Austritt aus der Turbine noch relativ heisse Abgas kann zusätzlich durch einen nachfolgenden Abhitzedampferzeuger 23 geschickt werden, um in einem separaten Wasser-Dampf-Kreislauf 25 Dampf für den Betrieb einer Dampfturbine 24 zu erzeugen. Eine solche Kombination wird als Kombikraftwerk bezeichnet. Die Dampfturbine 24 kann dabei mit dem Generator 18 auf der der Turbine 14 gegenüberliegenden Seite gekoppelt sein. Sie kann aber auch einen eigenen Generator antreiben.

Bei der 1-Wellen-Anlage der Fig. 1 steht die Drehzahl der Gasturbine 12 in einem festen Verhältnis zur im Generator 18 erzeugten Frequenz der Wechselspannung, die gleich der Netzfrequenz des Netzes 21 sein muss. Bei den heutzutage üblichen grossen Gasturbineneinheiten mit Leistungen von über 100 MW ist der Generatorfrequenz bzw. Netzfrequenz von 60 Hz eine Drehzahl der Gasturbine von 3600 U/min (z.B. Gasturbine GT24 der Anmelderin) und der Generatorfrequenz von 50 Hz eine Drehzahl von 3000 U/min (z.B. Gasturbine GT26 der Anmelderin) zugeordnet.

Soll ein anderes Verhältnis zwischen der Drehzahl der Gasturbine 12 und der Generator- bzw. Netzfrequenz erreicht werden, kann gemäss Fig. 2 in einer Kraftwerksanlage 10" grundsätzlich zwischen der Welle 19 der Gasturbine 12 und dem Generator 18 (Turbinenstrang 11') ein mechanisches Getriebe 26 eingefügt werden, das üblicherweise als Reduziergetriebe ausgebildet ist und damit höhere Drehzahlen und kleinere Bauweisen der Gasturbine 12 ermöglicht. Derartige mechanische Getriebe 26 sind jedoch aus Festigkeitsgründen nur für Leistungen bis etwa 130 MW einsetzbar. Auf der anderen Seite werden die grossen Leistungen pro Gasturbine von über 100 MW und die hohen Wirkungsgrade vor allem mit vergleichsweise langsam rotierenden 1-Wellen-Maschinen erreicht.

Folgende Nachteile resultieren aus der starren Kopplung zwischen Turbinendrehzahl und Netzfrequenz:
- Ein stabiler Betrieb am Netz ist nur eingeschränkt möglich.
- Es kommt zu Leistungseinbrüchen bei der Turbine, bzw. zu hoher thermischer und mechanischer Belastung bei der dynamischen Regelung zur Netzfrequenzstützung durch Anhebung der
   Gasturbineneintrittstemperatur.

- Eine Netzfrequenz- bzw. Verbraucher-unabhängige Leistungsregelung der Kraftwerksanlage ist nicht möglich.
- Eine Netzfrequenz- bzw. Verbraucher-unabhängige
   Wirkungsgradoptimierung der Kraftwerksanlage ist nicht möglich.
- Eine Netzfrequenz- bzw. Verbraucher-unabhängige Teillastoptimierung der Kraftwerksanlage ist nicht möglich.
- Eine Emissionsregelung der Gasturbine ist nur eingeschränkt möglich.
- Herkömmlich verliert das Kraftwerk bei Unterfrequenz zunächst Leistung;
   erst nach Ausgleichen der Minderleistung durch entsprechendes Nachregeln kann das Kraftwerk aktiv durch Mehrleistung das Netz stützen. Umgekehrt erhöht das Kraftwerk bei Überfrequenz zunächst Leistung; erst nach Ausgleichen der Mehrleistung durch entsprechendes Nachregeln kann das Kraftwerk aktiv durch Leistungsreduktion das Netz stützen.
- Es entstehen Transienten bei Frequenzschwankungen:
   ○ Bei Unterfrequenz wird als erstes der Ansaugmassenstrom reduziert; dies führt bei (im ersten Augenblick konstantem Brennstoffmassenstrom) zu einem Überfeuern und in der Regel kurz danach zu einem Unterfeuern durch den Reglereingriff.
   ○ Analog gibt es bei Überfrequenz ein Unterfeuern, gefolgt von einem Überfeuern.
   ○ Diese Transienten führen zu verminderter Lebensdauer und erhöhten Emissionen (NOx bei Überfeuern und CO bei Unterfeuern).

Bei einem (kurzzeitigen) Über- oder Unterfrequenz-Ereignis im Netz wird der Wellenstrang der Kraftwerksanlage sehr stark beschleunigt bzw. abgebremst. Bei dieser Beschleunigung wird eine grosse Menge Energie gespeichert bzw. freigesetzt. Mit dieser Energieaufnahme bzw. Freigabe stützt die Kraftwerksanlage die Netzfrequenz im ersten Augenblick durch das Trägheitsmoment der Welle.

Aus der US-A-5,694,026 ist ein 1-Wellen-Turbinen-Generator-Satz ohne Untersetzungsgetriebe bekannt, bei dem zwischen dem Ausgang des Generators und dem Netz ein statischer Frequenzumrichter angeordnet ist, mit dessen Hilfe die vom Generator erzeugte Wechselspannungs-Frequenz in die Frequenz des Netzes umgesetzt wird. Beim Starten der Gasturbine wird der Generator als Motor benutzt, der aus dem Netz über den statischen Frequenzumrichter mit Energie versorgt wird.

Aus der US-B2-6,979,914 ist eine Kraftwerksanlage mit einer 1-Wellen-Anordnung aus Gasturbine und Generator bekannt, bei der ebenfalls ein Umrichter zwischen Generatorausgang und Netz vorgesehen ist, um die vom Generator erzeugte Wechselspannung an die Netzfrequenz anzupassen.

Aus dem Artikel von L.J.J Offringa, L.J.J. et al. "A 1600 kW IGBT converter with interphase transformer for high speed gas turbine power plants", Proc. IEEE - IAS Conf. 2000. 4, 8-12 October 2000, Rome, 2000, pp. 2243-2248, ist eine Kraftwerksanlage mit schnell rotierender Gasturbine (18000 U/min) und vergleichsweise kleiner Ausgangsleistung (1600 kW) bekannt, bei der eine Frequenzentkopplung zwischen Generator und Netz durch einen Umrichter.

Die US 2004/0264089 beschreibt ein Stromerzeugungssystem, das Unregelmässigkeiten in einem Netz erkennt und einen Turbogenerator ohne Schaden von diesem Netz trennen kann.

Spezielle Regel- und Betriebskonzepte zum Stützen der Netzfrequenz bei kurzzeitigen Über- oder Unterfrequenz-Ereignissen ("Fast Frequency Support") sind diesen Druckschriften jedoch nicht zu entnehmen.

### DARSTELLUNG DER ERFINDUNG

Es ist Aufgabe der Erfindung, ein Verfahren zum Betrieb einer Frequenzentkoppelten Kraftwerksanlage zu schaffen, welches eine schnelle Antwort auf Über- oder Unterfrequenz-Ereignisse im Netz ermöglicht und dabei unerwünschte Transienten in der Kraftwerksanlage weitgehend vermeidet.

Die Aufgabe wird durch die Gesamtheit der Merkmale des Anspruchs 1 gelöst. Wesentlich für das erfindungsgemässe Verfahren ist, dass beim Auftreten kurzzeitiger Über- oder Unterfrequenz-Ereignisse im Netz die mechanische Drehzahl der Gasturbine unabhängig von der Netzfrequenz geregelt werden kann. Bei Unterfrequenz des Netzes kann die Drehzahl der Gasturbine stärker oder schwächer abgesenkt werden, als die Netzfrequenz, und bei Überfrequenz des Netzes stärker oder schwächer angehoben werden, als die Netzfrequenz. Hierdurch wird die Frequenzstützung durch Freisetzen bzw. Aufnehmen von Rotationsenergie aus dem Wellenstrang der Gasturbine erhöht. Unter kurzzeitigen Netzfrequenzänderungen, werden hier Änderungen der Netzfrequenz, die innerhalb von wenigen Sekunden oder einigen duzend Sekunden entstehen, wie sie zum Beispiel durch den Trip eines Kraftwerkes oder Zuschalten eines grossen Verbrauchers verursacht werden, verstanden. In der Regel versteht man in diesem Zusammenhang unter kurzzeitigen Änderungen Zeiträume wenigen Sekunden bis etwa 30s. Diese können allerdings auch bis zu mehreren Minuten dauern und in Stufen auftreten, wenn zum Beispiel erst ein Kraftwerk ausfällt und mit Verzögerung ein zweites Kraftwerk aufgrund der abgefallenen Netzfrequenz ausfällt. Sie stehen im Gegensatz zu länger dauernden Änderungen der Netzfrequenz, bei denen die Netzfrequenz über einen längeren Zeitraum auf reduzierter Frequenz betrieben wird. In der Regel versteht man unter länger dauernden Änderungen Zeiträume von über 30s. Diese können allerdings auch bis zu mehreren Minuten, in besonderen Fällen sogar bis zu Stunden anhalten. Dabei können kurzzeitige Netzfrequenzänderungen von länger dauernden Änderungen der Netzfrequenz gefolgt werden.

Gemäss einer Ausgestaltung der Erfindung erfolgt die Drehzahlabsenkung bzw. - anhebung der Gasturbine geregelt. Da die Drehzahlabsenkung geregelt erfolgt, kann eine geeignete Vorsteuerung die transienten Über- und Unterschwinger in der Heissgastemperatur minimieren.

Gemäss einer weiteren Ausgestaltung der Erfindung werden dabei eine Gasturbine mit einer Leistung grösser 100 MW und als elektronische Entkopplungsvorrichtung ein Frequenzumrichter in Form eines Matrixumrichters verwendet.

Eine andere Ausgestaltung zeichnet sich dadurch aus, dass die Betriebsfrequenz sich deutlich von der Netzfrequenz bzw. zweiten Betriebsfrequenz unterscheidet, wobei insbesondere die Netzfrequenz bzw. die Betriebsfrequenz 50 Hz oder 60 Hz beträgt. Allgemein sind für diese Ausgestaltung als deutliche Unterscheidung zwischen Netz und Betriebsfrequenz Abweichungen von mehr als 5% zu versehen. Für die Anwendung von 50 Hz Gasturbinen in 60 Hz Netzen und umgekehrt sind Unterschiede in der Grössenordnung von 20% zu erwarten. Bei Anwendung auf langsamlaufende Grossrriaschinen kann die Abweichung auch deutlich über 100 % liegen.

Bevorzugt wird auch als Gasturbine eine Gasturbine mit sequentieller Verbrennung verwendet.

Weiterhin ist von Vorteil, wenn der verwendete Matrixumrichter eine Mehrzahl von in einer (m x n)-Matrix angeordneten, steuerbaren bidirektionalen Schaltern umfasst, welche von einem Regler gesteuert m Eingänge wahlweise mit n Ausgängen verbinden, wobei m grösser n ist, und wobei erste Mittel zur Bestimmung der Vorzeichen der Ströme in den Eingängen und zweite Mittel zur Bestimmung der Vorzeichen der Spannungen zwischen den Eingängen vorgesehen sind, und wobei die ersten und zweiten Mittel mit dem Regler in Wirkverbindung stehen. Bidirektionale Schalter können aus einem Bauteil bestehen aber auch aus mehreren Bauteilen aufgebaut sein. Beispielsweise können zwei anti- parallele Thyristoren mit entgegengesetzter Durchschaltrichtung als steuerbare bidirektionale Schalter verwendet werden. Die Mittel zur Bestimmung der Vorzeichen von Strömen und Spannung können beispielsweise Strom- bzw. Spannungsmesser sein. Alternativ sind z. B. auch binäre Geber, die nur das Vorzeichen ausgeben, anwendbar.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein stark vereinfachtes Schaltbild einer Kraftwerksanlage mit Gasturbine und einem 1-Wellen-Turbinenstrang nach dem Stand der Technik;
- Fig. 2: ein stark vereinfachtes Schaltbild einer Kraftwerksanlage mit Gasturbine und einem mechanischen Getriebe nach dem Stand der Technik;
- Fig. 3: ein stark vereinfachtes Schaltbild einer Kraftwerksanlage mit Gasturbine und einer elektronischen Entkopplungsvorrichtung, wie sie zur Verwirklichung der Erfindung eingesetzt werden kann;
- Fig. 4: den beispielhaften inneren Aufbau eines Matrixumrichters, wie er als elektronische Entkopplungsvorrichtung in einer Anlage nach Fig. 4 zum Einsatz kommen kann; und
- Fig. 5: eine zu Fig. 4 vergleichbare Anlage Einrichtungen zur Durchführung des Verfahrens nach der Erfindung.
- Fig. 6: Einfluss des Verhältnisses von Netzfrequenzänderung und Änderung der Gasturbinendrehzahl auf ein Unterfrequenzereignis
- Fig. 7: Einfluss des Verhältnisses von Netzfrequenzänderung und Änderung der Gasturbinendrehzahl auf ein antizipiertes Unterfrequenzereignis
- Fig. 8: Unterfrequenzereignis bei fester Kupplung
- Fig. 8a: Verlauf von Gasturbinendrehzahl und dynamischer Leistung bei einem Unterfrequenzereignis und fester Kupplung
- Fig. 8b: Verlauf von Gasturbinendrehzahl und dynamischer Leistung bei einem Unterfrequenzereignis mit elektronischer Entkupplung und geregeltem Drehzahlgradienten
- Fig. 9: Unterfrequenzereignis mit elektronischer Entkupplung und konstanter Gasturbinendrehzahl
- Fig. 10: Unterfrequenzereignis mit elektronischer Entkupplung und antizipiertem Unterfrequenzereignis

### WEGE ZUR AUSFÜHRUNG DER ERFINDUNG

In Fig. 3 ist in einem stark vereinfachten Schaltbild eine Kraftwerksanlage mit Gasturbine und einer elektronischen Entkopplungsvorrichtung wiedergegeben, wie sie zur Durchführung des erfindungsgemässen Verfahrens geeignet ist. Die Kraftwerksanlage 10 umfasst eine Gasturbine 12 mit einem Verdichter 13 und sequentieller Verbrennung, bei der eine erste Brennkammer 15 mit einem ersten Brennstoff über eine erste Brennstoffzufuhr 17 Heissgas erzeugt, das in einer ersten Turbine 14a entspannt wird, dann in eine zweite Brennkammer 15' geleitet wird, wo es mit einem zweiten Brennstoff über eine zweite Brennstoffzufuhr 17' eine Zwischenüberhitzung des Heissgases bewirkt, das dann in der zweiten Turbine 14b entspannt wird. Anstelle der im Hinblick auf den Wirkungsgrad besonders günstigen sequentiellen Verbrennung kann aber auch eine einstufige Verbrennung vorgesehen werden. Die übrigen Teile der Anlage entsprechen den Teilen mit gleichem Bezugszeichen in den Fig. 1 oder 2.

Der Generator 18 ist direkt an die Welle 19 der Gasturbine 12 angeflanscht. Damit dreht der Generator 18 mit derselben Drehzahl wie die Gasturbine 12. Zwischen dem Ausgang des Generators 18 und dem Netz 21 ist nunmehr jedoch eine elektronische Entkopplungsvorrichtung 17 angeordnet, die eine Entkopplung der im Generator 18 erzeugten Betriebsfrequenz bzw. der Drehzahl der Gasturbine 12 von der vorgegebenen Netzfrequenz des Netzes bewirkt.

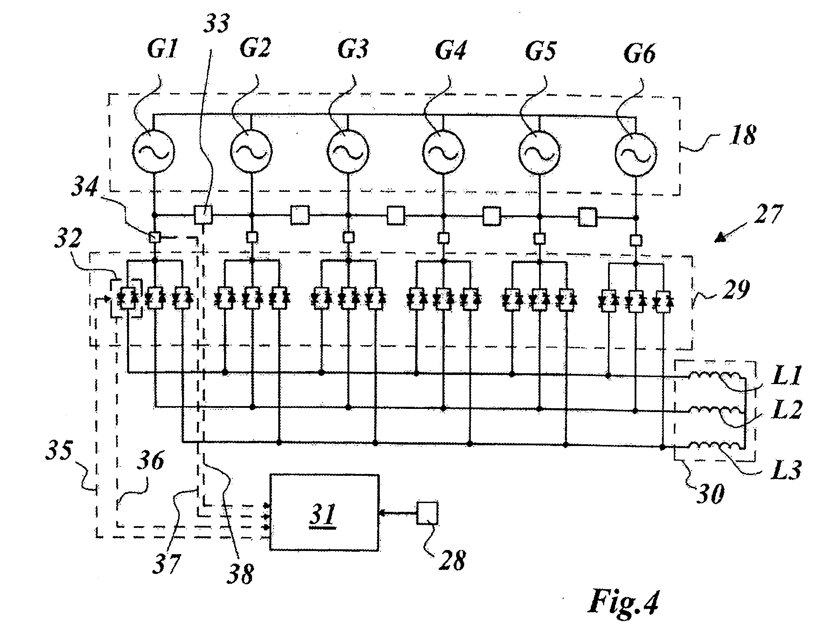

Die elektronische Entkopplungsvorrichtung 27 ist - um die Verlustleistung zu begrenzen - vorzugsweise als Matrixumrichter ohne Gleichstromzwischenkreis ausgebildet. Ein solcher Matrixumrichter, der aufgrund seiner Ansteuerung besonders verlustarm arbeitet, ist in der EP-A2-1 199 794 im Aufbau und in der Wirkungsweise beschrieben worden. Weitere Ausführungen zu einem solchen Matrixumrichter sind in der EP-A1-1 561 273, in der DE-A1-10 2004 016 453, der DE-A1-10 2004 016 463 und der DE-A1-10 2004 016 464 gemacht worden. In Fig. 4 ist das Prinzipschaltbild eines Matrixumrichters mit 6 Eingangsphasen und 3 Ausgangsphasen dargestellt. Der Matrixumrichter (27) verbindet in einer zeitlichen Abfolge 6 Phasen G1,..,G6 eines Generators 18 als Quelle mit 3 Phasen L1,..,L3 einer Last 30. Der dazu benötigte Leistungsteil 29 umfasst 18 bidirektionale Schalter 32 in Form von antiparallel-geschalteten Thyristoren (im allgemeinen Fall gibt es m x n Schalter für m Eingangs/Quellen-Phasen und n Ausgangs/Last-Phasen). Die Schalter 32 sind in einer (6 x 3)-Matrix angeordnet. Für die Ansteuerung der Schalter 32 ist eine Steuerung oder ein Regler 31 vorgesehen, der von einem Taktgeber 28 Zeitsignale (eine Taktfrequenz) erhält. Der Schaltzustand der Schalter 32 (EIN, AUS) wird überwacht und jeweils über eine erste Signalleitung 36 an den Regler 31 gemeldet. Die Schalter 32 werden von dem Regler 31 jeweils über eine Steuerleitung 35 angesteuert.

In den einzelnen Phasen G1,..,G6 des Generators 18 ist jeweils eine Strommesseinrichtung 34 angeordnet, die das Vorzeichen des Phasenstromes über eine zweite Signalleitung 37 an den Regler 31 meldet. Weiterhin sind zwischen den Phasen G1,..,G6 des Generators 18 Spannungsmesseinrichtungen 33 angeordnet, die das Vorzeichen der jeweiligen Phasendifferenzspannung über eine dritte Signalleitung 38 an den Regler 31 melden. Zu den Einzelheiten des Betriebsablaufs des Matrixumrichters wird auf die o.g. Druckschriften verwiesen. Mit der Entkopplungsvorrichtung 27, insbesondere in Form eines Matrixumrichters der beschriebenen Art, ergeben sich die folgenden Vorteile einer elektronischen Entkoppelung:
- Eine Stützung der Netzfrequenz des Netzes 21 wird in einem weiten Netzfrequenzbereich möglich. Während bei starrer Frequenzkopplung eine Netzfrequenzstützung im Bereich von 5-6% der Netzfrequenz erzielt werden kann, lässt sich durch die elektronische Entkopplung eine Stützung im Bereich von bis zu 20% erreichen.
- Eine Anpassung der Betriebsoptima (Leistung, Wirkungsgrad) in Abhängigkeit von den Umgebungsbedingungen (z.B. der Eintrittstemperatur) ist möglich.
- Die Leistung kann erhöht werden.
- Der Wirkungsgrad kann verbessert werden.
- Die Flexibilität bei Lastschwankungen und die Lebensdauer der Turbine können verbessert werden.
- Die Turbine kann weiter drehzahlkonstant laufen. Bisher auftretende zusätzliche thermische oder mechanische Belastungen, welche durch Maßnahmen zur Drehzahlstützung notwendig waren, entfallen.
- Die Emissionswerte können verbessert werden. Der zusätzliche Freiheitsgrad einer variablen Drehzahl erlaubt eine gewünschte Leistung bei einer höheren oder niedrigeren Drehzahl anzufahren. Damit verbunden sind niedrigere oder höhere Turbineneintritts-Temperaturen mit dem Effekt der Beeinflussung der Emissionen von CO₂ und NOx. Insbesondere können erhöhte Emissionen im Fall der Frequenzstützung vermieden werden.

Die vorrangige Möglichkeit, gemäss der Erfindung einen Turbinenstrang - Turbine und Generator - innerhalb einer Kraftwerksanlage unabhängig von der Netzfrequenz stabil bei einer gewünschten (Design-)Drehzahl betreiben zu können, unterstützt die Stabilisierung von Stromnetzen. Bei Frequenzeinbrüchen muss das Kraftwerk in der Lage sein, die bei normaler Netzfrequenz abgegebene Leistung zu halten, bzw. idealerweise sogar eine erhöhte Leistung an das Stromnetz abzugeben. Bisherige Kraftwerkssysteme können dies nur in einem begrenzten Mass sicherstellen. Die Netzfrequenzabsenkung spürt ein fest mit der Netzfrequenz gekoppeltes System als unerwünschte Drehzahlabsenkung auf der Turbine und dem Generator. Dabei sinkt die abgegebene Leistung bei ansonsten gleichen Betriebsparametern. Ein Gasturbinensystem reagiert in diesem Fall mit einer deutlich erhöhten Brennstoffzufuhr, was zu einer erhöhten HeissgasTemperatur innerhalb der Turbine führt. Diese wiederum reduziert erheblich die Lebensdauer der Turbine, was die Betriebskosten der Anlage steigert. Der Schadstoffausstoss in Form von NO_{X} erhöht sich in dieser Betriebsphase ebenfalls deutlich. Somit sind bereits zwei Grenzen definiert, die eine Leistungserhöhung bei Netzfrequenzabfall stark einschränken - Lebensdauer und Emissionen. Als dritter Aspekt spielt die mechanische Verträglichkeit eine Rolle. Starke Frequenzabfälle über 6% führen zum Abschalten von Kraftwerksanlagen, da diese mechanisch nicht in der Lage sind, mit entsprechend reduzierten Drehzahlen betrieben werden zu können.

Im Falle eines Netzfrequenz-entkoppelten Systems entfallen alle oben geschilderten Nachteile. Es gibt keine Einschränkung bezüglich minimal zulässiger Frequenzschwankungen, da der Turbinenstrang keine aufgeprägte Drehzahlschwankung spürt. Demzufolge treten auch keine Schadstofferhöhungen und Einbussen bei der Lebensdauer auf.

Ein weiterer positiver Aspekt eines Netzfrequenz-unabhängigen Kraftwerksystems, ist die bessere Anpassungsfähigkeit einer Anlage an unterschiedliche Standortbedingungen. Die bereits erwähnte Netzstabilität ist ein wesentlicher Aspekt, der entscheidend vom Standort abhängt. Daneben sind es vor allem unterschiedliche Umgebungsbedingungen, wie Aussentemperaturen, Luftdruck, insbesondere der durch die Aufstellungshöhe bedingte Luftdruck, Luftfeuchtigkeit, auch Brennstoffzusammensetzung, welche den Betriebzustand eines Kraftwerks beeinflussen. Der zusätzliche Freiheitsgrad der Netzfrequenz-unabhängigen Drehzahlregelung erlaubt es, entsprechend den aktuellen Umgebungsbedingungen jeweils optimierte Betriebsbedingungen zu erzeugen. Dabei sind sowohl Wirkungsgradverbesserungen wie auch Leistungssteigerungen möglich.

Wie bereits oben erwähnt, wird durch die drehzahlmässige Entkopplung der Gasturbine von der Netzfrequenz bzw. der Betriebsfrequenz eines angeschlossenen Verbrauchers ein verbesserter Betrieb der Gasturbine möglich: Die Gasturbine wird in allen Betriebsbereichen unabhängig von der Netzfrequenz bzw. Betriebsfrequenz des Verbrauchers so nahe wie möglich an der aerodynamischen Designdrehzahl betrieben, um die Performance, das heisst Wirkungsgrad und Leistung, zu optimieren.

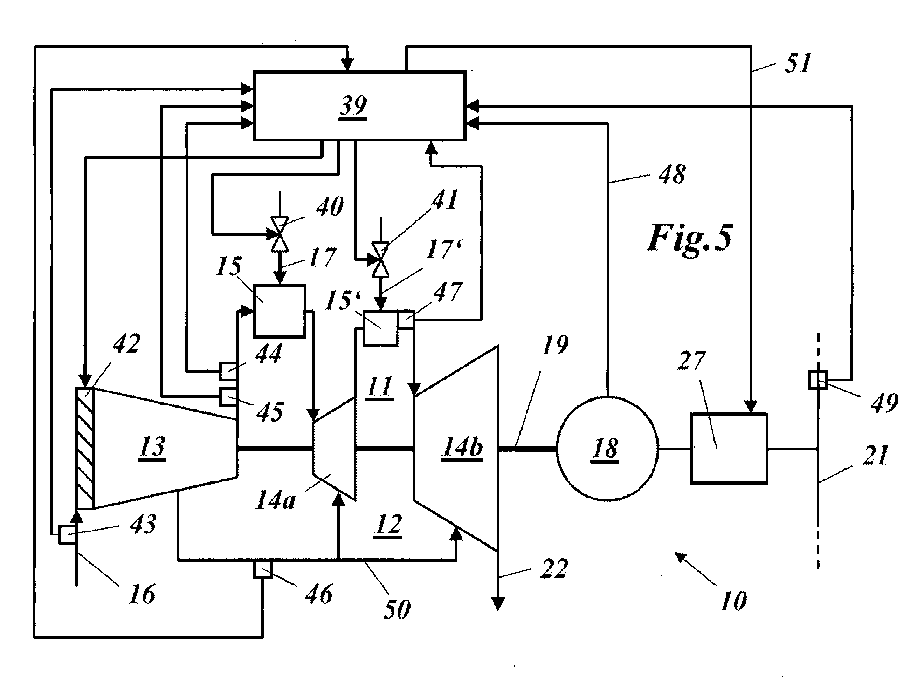

In Fig. 5 ist ein vereinfachtes Schema einer Kraftwerksanlage 10 wiedergegeben, das für ein Betriebsverfahren gemäss der Erfindung ausgelegt ist. Der Turbinenstrang 11 mit der Gasturbine 12 und dem Generator 18 entsprechen denen in Fig. 4. Dies gilt auch für die elektronische Entkopplungsvorrichtung 27 und das angeschlossene Netz 21. Das Netz 21 kann ein allgemeines Versorgungsnetz, aber auch ein Bahnstromnetz sein. Auf die Darstellung einer möglichen zusätzlichen Dampfturbine mit entsprechendem Wasser/Dampf-Kreislauf ist hier aus Platzgründen verzichtet worden.

Zur Regelung oder Steuerung der Gasturbine 12 dienen mindestens eine Reihe verstellbare Verdichterleitschaufeln 42 am Eingang des Verdichters 13 sowie Regelventile 40 und 41 in der Brennstoffzufuhr 17 bzw. 17' zu den Brennkammern 15, 15'. Die entsprechenden Regelsignale kommen aus einer Steuerung oder Regelung 39 nach Massgabe bestimmter Eingangsparameter, die einzeln oder in wählbarer Kombination verwendet werden können. Ein möglicher Parameter ist die Verdichtereintrittstemperatur, die mit einem am Lufteinlass 16 angeordneten ersten Messwertaufnehmer 43 gemessen wird. Andere mögliche Parameter sind die Verdichterendtemperatur und der Verdichterenddruck, die mit einem zweiten und dritten Messwertaufnehmer 44 bzw. 45 am Ausgang des Verdichters gemessen werden. Ein weiterer Messwertaufnehmer 46, der an einer Kühlluftversorgung 50 vom Verdichter 13 zu thermisch belasteten Bauteilen der Gasturbine 12, z.B. in den beiden Turbinen 14a und 14b, angeordnet ist, misst den Druck und/oder die Temperatur und/oder die Durchflussmenge der Kühlluft. Ein weiterer Messwertaufnehmer 47 kann an der zweiten Brennkammer 15' angeordnet sein, um den Druck in dieser Brennkammer zu messen. Die Drehzahl der Gasturbine 12 kann beispielsweise am Generator 18 abgenommen und über eine Messleitung 48 in die Regelung 39 eingegeben werden. Für die Messung der Netzfrequenz im Netz 21 kann ein Netzfrequenzaufnehmer 49 vorgesehen werden.

Die Regelung 39 kann dann die aerodynamische oder mechanische Drehzahl der Gasturbine 12 auf einen konstanten Wert regeln, ohne dass die Drehzahl in anderer Weise von der Netzfrequenz F des Netzes 21 beeinflusst wird.

Die Regelung der Gasturbinendrehzahl kann bei völliger Entkopplung der Gasturbine 12 vom Netz 21 an der Gasturbine 12 über entsprechende Parameter, wie Brennstoffmassenstrom und Stellung der Verdichtervorleitreihe, durchgeführt werden. Die Regelung der Drehzahl kann alternativ beispielsweise auch dadurch erfolgen, dass die in der Regelung 39 der Gasturbine berechnete Solldrehzahl 51 an den Regler 31 der Entkopplungsvorrichtung 27 übertragen wird und über den Generator die Drehzahl auf die Gasturbine 12 aufgezwungen wird. Der Generator 18 stützt sich über die Entkopplungsvorrichtung 27 dabei gegen das im Vergleich zur Gasturbine 12 quasi statische Netz 21 ab und zwingt durch die Regelung des Frequenzverhältnisses zwischen Netz F und mechanischer Drehzahl n_{mech} der Gasturbine die Drehzahl n_{mech} auf. Die Entkopplungsvorrichtung 27 arbeitet in diesem Fall als ein variables Getriebe mit geregeltem Übersetzungsverhältnis zwischen mechanischer Drehzahl der Gasturbine n_{mech} und Netzfrequenz F.

Nach der Erfindung wird bei einem kurzzeitigen Über- oder Unterfrequenz-Ereignis im Netz 21 nicht die mechanische Drehzahl weitestgehend konstant gehalten, sondern die Anlage wird wie folgt gefahren:
i. Bei einem Unterfrequenz-Ereignis wird über die Frequenzumformung der Wellenstrang aus Gasturbine 12 und Generator 18 stärker abgesenkt, als die Netzfrequenz. Durch die stärkere Absenkung der mechanischen Drehzahl wird die Frequenzstützung durch Freisetzen der Rotationsenergie erhöht. Da in diesem Fall die Drehzahlabsenkung geregelt erfolgt, kann eine geeignete Vorsteuerung die transienten Über- und Unterschwinger in der Heissgastemperatur minimieren.
ii. Analog kann bei einem Überfrequenz-Ereignis des Netzes 21 die mechanische Drehzahl der Gasturbine 12 stärker erhöht werden, als die Netzfrequenz. Durch die stärkere Erhöhung der mechanischen Drehzahl wird die Frequenzstützung durch Aufnahme von Rotationsenergie im Wellenstrang erhöht. Auch in diesem Fall kann eine geeignete Vorsteuerung die transienten Über- und Unterschwinger in der Heissgastemperatur minimieren

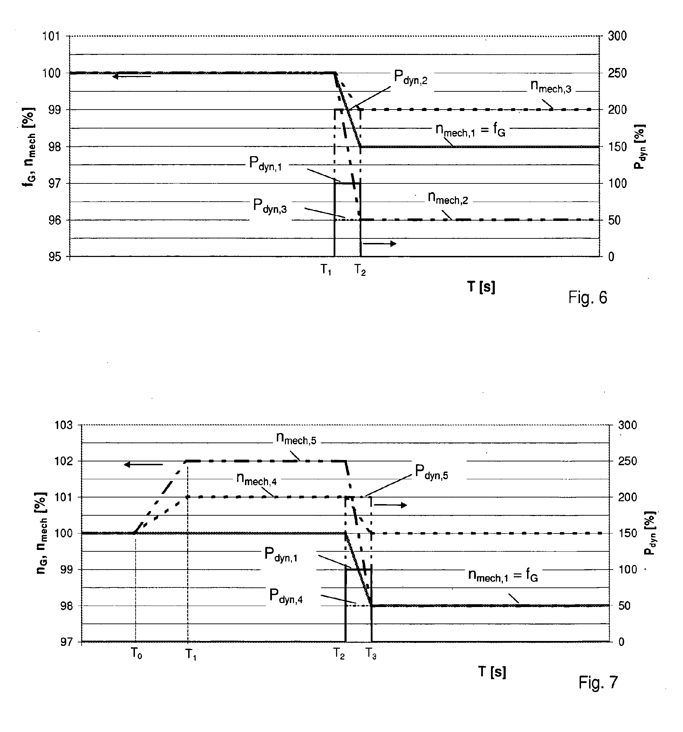

Der Verlauf von Netzfrequenzereignissen sowie mögliche Einflussnahme durch die elektrische Entkoppelung auf den Verlauf derartiger Ereignisse ist in Fig. 6 bis Fig. 10 anhand von Unterfrequenzereignissen beispielhaft erläutert. Sie sind für ein 50 Hz Netz 21 beschrieben, sind aber analog auch für ein 60 Hz Netz 21 oder ein Netz 21 mit anderer Auslegungsfrequenz anwendbar. Durch Analogie erschliessen sich hiermit für den Fachmann auch die entsprechenden Konzepte für Überfrequenzereignisse. Störsignale, hochfrequente kleine Variationen der Netzfrequenz F oder Rauschen sind vernachlässigt und nicht dargestellt.

Der Einfluss von hochfrequenten kleinen Variationen der Netzfrequenz F oder Rauschen auf die Regelung kann durch ein Totband unterdrückt werden. Dies bedeutet, dass auf Frequenzänderungen erst nach Überschreiten eines Grenzwertes reagiert wird.

Da es möglich ist, dass die Netzfrequenz langsam aus dem Totband wandert, auf diese langsame Frequenzverschiebung aber nicht mit schnellen Laständerungen der Gasturbine geantwortet werden soll, kann in der Regelung mit der Frequenzabweichung relativ zu einem gleitenden Mittelwert der Netzfrequenz plus einem Totband um diesen Mittelwert gearbeitet werden. Totband und gleitender Mittelwert, auch gemittelte Versorgungsnetzfrequenz genannt, sind für herkömmliche Gasturbinen 12 ohne elektrische Entkupplung von Netz 21 und Gasturbine 12 ausführliche in der EP0858153 beschrieben. Die EP0858153 und ihre Anwendung auf Gasturbinen 12 mit elektronischer Entkupplung zum Netz 21 sind Bestandteil dieser Anmeldung.

In den Fig. 6 und 7 wird die dynamische Leistung P_{dyn}, die während Drehzahländerungen des Wellenstranges einer Gasturbine 12 abgegeben wird, anhand von idealisierten Beispielen diskutiert.

In Fig. 6 ist schematisch der Verlauf der Gasturbinendrehzahl n_{mech}, sowie die von dem Gasturbinenwellenstrang an das Netz abgegebene dynamische Leistung P_{dyn} während eines Unterfrequenzereignisses dargestellt. In dem Beispiel fällt die Netzfrequenz F mit einem konstanten Gradienten zwischen den Zeiten T₂ und T₃ von 50 Hz auf 49 Hz ab. Aufgrund der Änderung der kinetischen Rotationsenergie des Wellenstranges wird bei der Drehzahländerung dynamische Leistung P_{dyn} abgegeben, die proportional zum Gradienten der Drehzahländerung ist. Der Einfluss des Verhältnisses zwischen Netzfrequenzänderung und Änderung der Gasturbinendrehzahl auf ein Unterfrequenzereignis bei vorgegebener Änderung der Netzfrequenz, die hier als normierte Netzfrequenz f_{G} dargestellt ist, wird anhand von 3 Verhältnissen erläutert. Im Ausgangsfall wird die mechanische Drehzahl n_{mech,1} des Gasturbinenwellenstranges im Verhältnis 1:1, wie es zwangsläufig auch für eine feste mechanische Kupplung der Fall ist, mit der Netzfrequenz F geändert. Entsprechend wird während der Drehzahländerung eine normierte dynamische Leistung P_{dyn,1} abgegeben. Diese ist proportional zum Gradienten der Drehzahländerung und zur Drehzahl, wobei hier vereinfachend nur die Abhängigkeit zum Drehzahlgradienten dargestellt ist.

Im zweiten Fall wird die Drehzahl mit einem Verhältnis von 2:1 stärker abgesengt als die Netzfrequenz f_{G}. Entsprechend kann die doppelte dynamische Leistung P_{dyn,2} abgegeben werden. Dafür muss aber eine doppelt so grosse Absenkung der mechanischen Drehzahl n_{mech,3} in Kauf genommen werden.

Im dritten Fall wird die Drehzahl mit einem Verhältnis von 1 :2 schwächer abgesengt als die Netzfrequenz f_{G}. Entsprechend kann die nur die halbe dynamische Leistung P_{dyn,3} abgegeben werden. Die mechanische Drehzahl n_{mech,3} wird dafür aber nur halb so stark abgesenkt.

In Fig. 7 ist schematisch der Einfluss des Verhältnisses zwischen Netzfrequenzänderung und Änderung der Gasturbinendrehzahl elektronischer Entkupplung bei einem antizipierten Unterfrequenzereignis dargestellt. Zum Vergleich ist nochmals der erste Fall dargestellt, in dem die Drehzahländerung des Wellenstranges n_{mech,1} genau der Änderung der normierten Netzfrequenz f_{G} folgt und damit während der Transitenten zwischen der Zeit T₂ und T₃ zur Abgabe der dynamischen Leistung P_{dyn,1} führt. In diesem Beispiel ist der Operator über ein bevorstehendes Ereignis, wie zum Beispiel die Abschaltung eines grösseren Kraftwerkes vom Netz oder das Zuschalten eines grösseren Verbrauchers an das Netz, dass einen Frequenzeinbruch zu Folge haben kann, benachrichtigt. Entsprechend wählt er zu dem Zeitpunkt T₀ einen Bereitschaftsmodus der Gasturbine an. Zur Vorbereitung auf das Unterfrequenzereignis steigt jetzt die mechanische Drehzahl n_{mech} der Gasturbine und erreicht zum Zeitpunkt T₁ eine erhöhte mechanische Drehzahl n_{mech}. Entsprechend wird von dem Wellenstrang dynamische Leistung P_{dyn} aufgenommen (nicht dargestellt).

In dem ersten Beispiel zu einem antizipierten Unterfrequenzereignis wird die mechanische Drehzahl n_{mech,4} der Gasturbine 12 zunächst zwischen T₀ und T₁ um 1 % erhöht. Ausserdem wird während des Netzfrequenzeinbruches zwischen T₂ und T₃ die Drehzahl n_{mech,4} des Gasturbinenwellenstranges mit einem Verhältnis von 1:2 schwächer abgesengt als die Netzfrequenz f_{G}. Entsprechend kann die nur die halbe dynamische Leistung P_{dyn,4} abgegeben werden. Die mechanische Drehzahl n_{mech,4} wird dafür aber nur halb so stark abgesenkt und am Ende des Netzfrequenzeinbruches fährt die Gasturbine 12 noch mit Designdrehzahl.

In einem zweiten Beispiel zu einem antizipierten Unterfrequenzereignis wird die mechanische Drehzahl n_{mech,5} der Gasturbine zunächst zwischen T₀ und T₁ um 2% erhöht. Ausserdem wird während des Netzfrequenzeinbruches zwischen T₂ und T₃ die Drehzahl des Gasturbinenwellenstranges mit einem Verhältnis von 2:1 stärker abgesengt als die Netzfrequenz f_{G}. Entsprechend kann die doppelte dynamische Leistung P_{dyn,5} abgegeben werden. Die mechanische Drehzahl n_{mech,5} wird dafür auch doppelt so stark abgesenkt. Aufgrund der erhöhten Drehzahl vor dem Netzfrequenzeinbruche fährt die Gasturbine aber am Ende des Netzfrequenzeinbruches immer noch mit der selben Drehzahl n_{mech}, wie in dem Referenzfall mit fester Kupplung zwischen Netz 21 und Gasturbine 12.

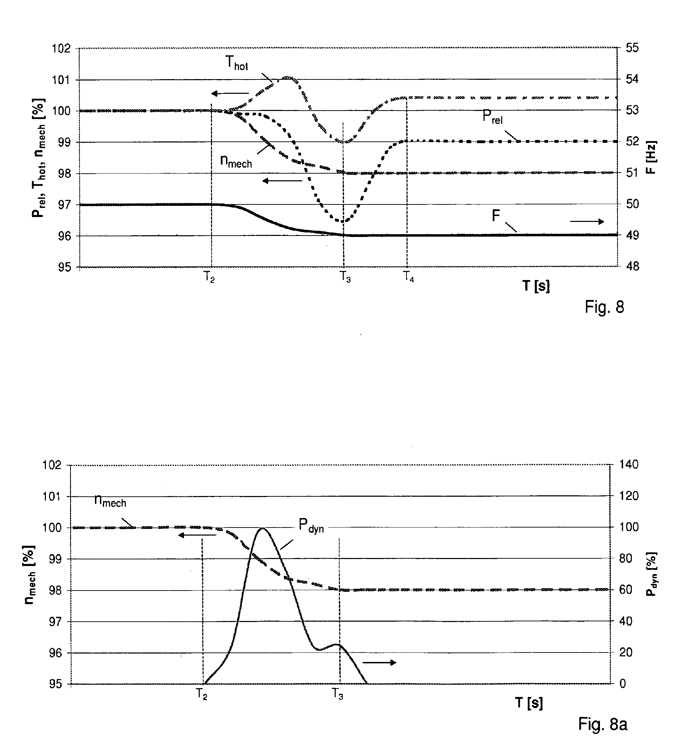

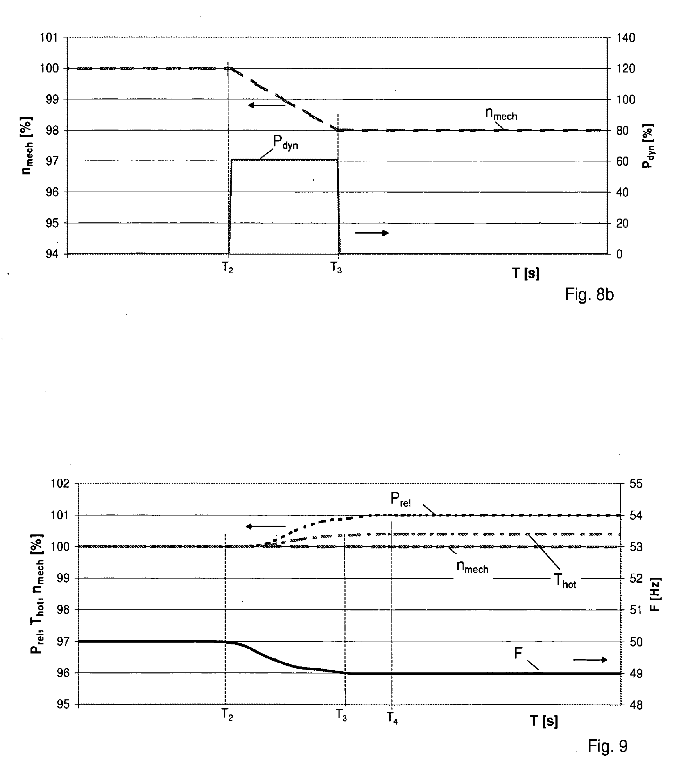

In den Fig. 8, 9 und 10 ist die oben diskutierte dynamische Leistung P_{dyn} vernachlässigt und sind die wichtigsten Prozessparameter sowie die quasistationäre Leistung Pᵣₑₗ der Gasturbine 12 gezeigt. Als quasistationäre Leistung ist hier die Leistung zu verstehen, die die Gasturbine 12 im stationären Betrieb aufgrund der thermischen Randbedingungen bei der jeweiligen Drehzahl abgeben würde. Der Verlauf der dynamischen Leistung P_{dyn} ist Beispielhaft anhand der Figuren 8a und 8b diskutiert.

In Fig. 8 ist zunächst schematisch ein Beispiel für ein Unterfrequenzereignis mit fester Kupplung zwischen Gasturbine 12 und Netz 21 gezeigt. Ausgehend von Vollastbetrieb kommt es zwischen der Zeit T₂ und T₃ zu einem Frequenzeinbruch, bei dem die Netzfrequenz F von 50 Hz auf 49 Hz sinkt. Entsprechend fällt die mechanische Drehzahl n_{mech} von 100% auf 98%. Proportional zur Drehzahl sinkt der Ansaugmassenstrom der Gasturbine 12 (nicht gezeigt), was bei zunächst konstantem Brennstoffmassenstrom (ebenfalls nicht gezeigt) zu einem Anstieg der Heissgastemperatur Tₕₒₜ führt. Aufgrund des reduzierten Ansaugmassenstromes sinkt die Gasturbinenleistung Pᵣₑₗ. Dabei ist der Leistungsverlust im ersten Augenblick aufgrund des Anstiegs der Heissgastemperatur Tₕₒₜ klein. Mit einer Zeitverzögerung versucht die Regelung 39 der Gasturbine 12 dem steilen Anstieg der Heissgastemperatur Tₕₒₜ entgegen zu wirken. In der Realität führt dies je nach transientem Verlauf des Unterfrequenzereignisses, der Geschwindigkeit der Messketten und der Zeitkonstanten der Reglung 39 zu einem Unterschwingen der Heissgastemperatur Tₕₒₜ. Die minimale Heissgastemperatur Tₕₒₜ wird in diesem Beispiel zum Zeitpunkt T₃ erreicht. Zu diesem Zeitpunkt stabilisiert sich hier auch die Netzfrequenz F bei 49 Hz. Entsprechend der niedrigen mechanischen Drehzahl n_{mech} und der tiefen Heissgastemperatur Tₕₒₜ zum Zeitpunkt T₃ erfährt die Gasturbinenleistung Pᵣₑₗ einen deutlichen Einbruch. Erst mit Verzögerung bringt der Regler zur Zeit T₄ die Heissgastemperatur Tₕₒₜ auf den für Frequenzunterstützung gegenüber dem Auslegungswert angehobenen Sollwert. Das Minimum in der Heissgastemperatur Tₕₒₜ wird in dem Beispiel rein zufällig zu der Zeit T₃ erreicht.

In Fig. 8a wird der Verlauf der Gasturbinendrehzahl n_{mech} des Beispiels von einem Unterfrequenzereignis mit fester Kupplung zwischen Gasturbine 12 und Netz 21 aus Fig. 8 noch mal gezeigt. Ausserdem wird schematisch die zugehörige normierte dynamischer Leistung P_{dyn} über Zeit dargestellt. Einsprechend des Verlaufes der Frequenzänderung ergibt sich zum Zeitpunkt des steilsten Drehzahlgradienten ein Maximum in der dynamischen Leistung P_{dyn}. Die dargestellte normierte dynamische Leistung P_{dyn} ist mit diesem Maximalwert normiert.

Je nach Unterfrequenzereignis und Trägheitsmoment des Wellenstranges kann dies Maximum die Grössenordnung der Vollastleistung der Gasturbine 12 erreichen. Entsprechend ist das Kraftwerk, insbesondere der Wellenstrang der Gasturbine 12 und die elektrischen Anlagen, auszulegen.

Durch die elektrische Entkuppelung wird es möglich, derartige Maxima in der dynamischen Leistung P_{dyn} zu vermeiden. In Fig. 8b ist zum Vergleich gezeigt, wie mit einem konstanten Gradienten in der mechanischen Drehzahl n_{mech} die selbe kinetische Energie in der Zeitspanne zwischen T₂ und T₃ abgegeben wird, wie in dem Beispiel aus Fig. 8a. Die dynamische Leistung P_{dyn} wird aber auf 60% des Maximalwertes vom Beispiel aus Fig. 8a begrenzt. Entsprechend kann Kraftwerk mit einer Entkupplung und geregeltem oder begrenztem Drehzahlgradienten auf niedrigere Maxima ausgelegt werden. Bei Betrieb mit konstanter vom Netz 21 unabhängiger Gasturbinendrehzahl n_{mech} kann ganz auf die Auslegung für dynamische Leistung P_{dyn} verzichtet werden.

Bei der Wahl eines Fahrkonzeptes, bei dem die Drehzahl n_{mech} der Gasturbine 12 geregelt und vom Netz 21 entkoppelt gefahren wird, kann die Regelung 39 Änderungen des Ansaugmassenstromes und der Randbedingungen der Brennkammer 15, 15* näherungsweise vorausberechnen und entsprechend eine Vorsteuerung der Regelventile 17, 17* vornehmen. Damit kann das transiente Verhalten verbessert werden und Maxima in der Heissgastemperatur vermeiden oder reduzieren werden.

In Fig. 9 ist analog zu Fig. 8 das selbe Unterfrequenzereignis mit elektronischer Entkupplung und konstanter Gasturbinendrehzahl schematisch gezeigt. Die mechanische Drehzahl der Gasturbine n_{mech} bleibt unabhängig von der Netzfrequenz F konstant. Entsprechend ist auch kein unmittelbarer Einfluss der Netzfrequenz F auf die Heissgastemperatur Tₕₒₜ und die Gasturbinenleistung Pᵣₑₗ zur Zeit T₂ zu sehen. Erst mit kurzer Verzögerung hebt die Reglung 39 die Heissgastemperatur Tₕₒₜ an, um zur Frequenzstützung die Gasturbinenleistung Pᵣₑₗ zu erhöhen. Die Netzfrequenz F stabilisiert sich zum Zeitpunkt T₃ auf 49 Hz. Durch die Trägheit der Gasturbine 12, der Messungen und der Regelung 39 kommt die Gasturbine 12 erst mit kleiner Zeitverzögerung am Zeitpunkt T₄ zu einem quasistationären Betrieb mit konstanter Leistung Pᵣₑₗ und Heissgastemperatur Tₕₒₜ.

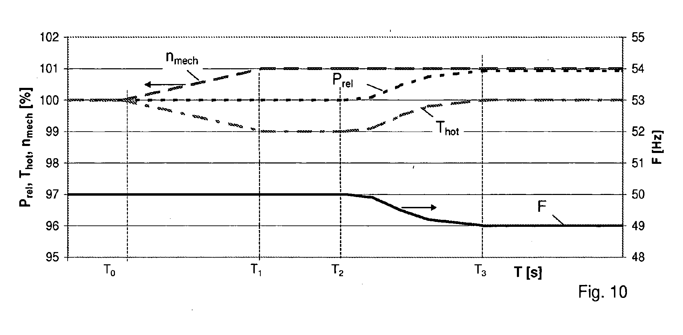

Als weiteres Beispiel ist in Fig. 10 schematisch ein Unterfrequenzereignis mit elektronischer Entkupplung, antizipiertem Unterfrequenzereignis und während des Frequenzeinbruches konstanter gehaltener Gasturbinendrehzahl n_{mech} gezeigt. In diesem Beispiel ist der Operator über ein bevorstehendes Ereignis, wie zum Beispiel die Abschaltung eines grösseren Kraftwerkes vom Netz 21 oder das Zuschalten eines grösseren Verbrauchers an das Netz 21, dass einen Frequenzeinbruch zu Folge haben kann, benachrichtigt. Entsprechend wählt er zu dem Zeitpunkt T₀ einen Bereitschaftsmodus der Gasturbine 12 an. Zur Vorbereitung auf das Unterfrequenzereignis steigt jetzt die mechanische Drehzahl n_{mech} der Gasturbine und erreicht zum Zeitpunkt T₁ beispielsweise 101 %. Um die Last Pᵣₑₗ konstant auf der Auslegungsvolllast zu halten, wird entsprechend der erhöhten Drehzahl n_{mech} die Heissgastemperatur Tₕₒₜ reduziert. Dabei wird gegenüber einem Betrieb bei der Auslegungsdrehzahl 100% und AuslegungsHeissgastemperatur evtl. eine Wirkungsgradeinbusse in Kauf genommen. Entsprechend der Drehzahlerhöhung wird von dem Wellenstrang dynamische Leistung P_{dyn} aufgenommen (nicht dargestellt). Ausserdem wird der Abstand in der mechanischen Drehzahl n_{mech} zu einem Lastabwurf für Überdrehzahl reduziert.

Zum Zeitpunkt T₂ beginnt das antizipierte Unterfrequenzereignis. Aufgrund der Entkopplung von Gasturbinendrehzahl n_{mech} und Netzfrequenz F kann die Gasturbine 12 weiter auf der erhöhten Drehzahl n_{mech} betrieben werden. Entsprechend der bei der Erhöhung der Drehzahl n_{mech} zwischen Zeit T₀ und T₁ durchgeführten Absenkung der Heissgastemperatur Tₕₒₜ, kann jetzt die Heissgastemperatur Tₕₒₜ zur Leistungssteigerung auf den Volllastwert erhöht werden. Resultierend wird die Gasturbine 12 bei Auslegungsheissgastemperatur mit erhöhter Drehzahl n_{mech} betrieben und kann in diesem Beispiel zur Frequenzunterstützung eine über der Volllastleistung liegende normierte Leistung abgeben. Diese liegt in diesem Beispiel bei knapp 101%. Dies kann ohne die sonst für Frequenzunterstützung übliche Inkaufnahme von Lebensdauereinbussen realisiert werden.

Weitere Prozessgrössen, wie Massenströme, Verdichterenddruck, Verdichteraustrittstemperatur, Kühllufttemperaturen und Drücke sowie die Abgasparameter, ändern sich in dem Fachmann bekannter Weise abhängig von dem gewählten Fahrkonzept.

Analoge Fahrkonzepte sind für Gasturbinen mit sequentieller Verbrennung denkbar. Dabei besteht prinzipiell die Möglichkeit die Heisgasstemperaturen Tₕₒₜ beider Brennkammern 15, 15' zur Regelung zu verwenden oder nur die Heissgastemperatur Tₕₒₜ einer Brennkammer 15, 15' zu ändern. Die Kombinationen mit weiteren Parametern ist hier ebenfalls je nach Fahrkonzept und Betriebspunkt vorzusehen.

Die Verhältnisse der Einflüsse von Drehzahl n_{mech} und Heissgastemperatur Tₕₒₜ auf die Gasturbinenleistung P_{rel,} sowie der dynamische Ablauf der Regelung sind stark von der Bauart der Gasturbine 12 und der implementierten Regelung 39 sowie den Regelparametern abhängig. Beispielsweise ist der Einfluss der Heissgastemperatur Tₕₒₜ einer zweiten Brennkammer 15' bei einer Gasturbine 12 mit sequentieller Verbrennung signifikant höher als der Einfluss einer ersten Brennkammer 15. Abhängig von Auslegungskriterien der Gasturbine 12, wie z.B. den mechanischen, aerodynamischen und Kühlungsanforderungen, sowie den Netzanforderungen kann das Fahrkonzept der Gasturbine 12 entsprechend den gezeigten Ausführungsbeispielen optimiert werden. Dabei sind die Fahrkonzepte nicht auf die dargestellten Beispiele beschränkt, sondern können durch den Fachmann entsprechend den Anforderungen kombiniert und erweitert werden.

Um das Netz durch eine hohe dynamische Leistung P_{dyn} zu stützen, kann es beispielsweise Vorteilhaft sein, zunächst die Gasturbinendrehzahl n_{mech} mit einem Drehzahlgradienten zu ändern, der höher ist als der der Netzfrequenzänderung. Da der zulässige Drehzahlbereich der Gasturbine 12 durch mechanische und aerodynamische Grenzen limitiert ist, sind bei dieser Abgabe von dynamischer Leistung P_{dyn} natürlich Grenzen gesetzt. Vor Erreichen dieser Grenzen muss die Gasturbinendrehzahl n_{mech} mit einem ausreichenden Sicherheitsabstand stabilisiert werden. Um nicht abrupt von einer Fahrweise mit sehr hoher dynamischer Leistungsabgabe P_{dyn} zu einer Fahrweise ohne dynamische Leistungsabgabe P_{dyn} zu kommen, kann die mechanische Drehzahl n_{mech} beispielsweise zunächst mit einem hohen Gradienten, der grösser als der der Netzfrequenzänderung ist, bis zu einem ersten Limit, das noch relativ viel Marge zu den Designgrenzen der Gasturbine 12 hat, reduziert werden. Nach Erreichen dieses ersten Limits kann die Drehzahl n_{mech} der Gasturbine 12 mit einem reduzierten Gradienten, der beispielsweise kleiner als der der Netzfrequenzänderung ist, weiter verändert werden. Entsprechend diesem reduzierten Gradienten kann noch dynamische Leistung P_{dyn} an das Netz 21 abgegeben werden, bis ein zweites Limit erreicht wird. Dies zweite Limit repräsentiert den Mindestabstand zu den Designgrenzen der Gasturbine 12, der einzuhalten ist, um einen sicheren Betrieb zu gewährleisten. Da die Designgrenzen sowohl mechanische Grenzen als auch aerodynamische Grenzen beinhaltet, können die Limite Funktionen der Betriebsbedingungen der Gasturbine 12, insbesondere der mechanischen Drehzahl n_{mech}, der aerodynamischen Drehzahl und von Drücken oder Druckverhältnissen, sein.

Neben einer Fahrweise mit festen Gradienten oder Verhältnissen, die sich bei Limiten stufenweise ändern, kann das Verhältnis zwischen Änderung der mechanischen Drehzahl n_{mech} und Netzfrequenzänderung als Funktion des Abstandes von der aktuellen mechanischen Drehzahl n_{mech} der Gasturbine 12 und den Designlimiten gewählt werden. Dabei geht das Verhältnis gegen Null, wenn sich die mechanische Drehzahl n_{mech} dem Mindestabstand zu den Designlimiten der Gasturbine 12 nähert.

Wenn sich die Netzfrequenz F nach einem Unter- oder Überfrequenzereignis stabilisiert hat, kann durch die elektrische Entkupplung die Gasturbine 12 unabhängig von dem Wert der Netzfrequenz F wieder auf die optimale mechanische Drehzahl n_{mech} gefahren werden. Dazu wird der Wellenstrang mit einem kleinen Gradienten geregelt beschleunigt, bzw. verzögert. Insbesondere bei einer Beschleunigung des Wellenstranges ist der Gradient ausreichend klein zu wählen, damit die zur Beschleunigung benötigte dynamische Leistung P_{dyn} keine signifikante Reduktion der an das Netz 21 abgegeben Leistung zur Folge hat. Der Gradient ist in der Regel dabei in so zu wählen, dass nur maximal etwa 5% der Gasturbinenleistung als dynamische Leistung P_{dyn} zur Beschleunigung verwendet werden. Bevorzugt ist der Anteil sogar kleiner als 3% zu halten. Praktisch ist ein Anteil kleiner 1% ausreichend.

### BEZUGSZEICHENLISTE

- 10,10',10": Kraftwerksanlage
- 11,11': Turbinenstrang
- 12: Gasturbine
- 13: Verdichter
- 14,14a,b: Turbine
- 15,15': Brennkammer
- 16: Lufteinlass
- 17,17': Brennstoffzufuhr
- 18: Generator
- 19: Welle
- 20: Netzverbindung (frequenzgekoppelt)
- 21: Netz
- 22: Abgasauslass
- 23: Abhitzedampferzeuger
- 24: Dampfturbine
- 25: Wasser-Dampf-Kreislauf
- 26: Getriebe (mechanisch)
- 27: Entkopplungsvorrichtung
- 28: Taktgeber
- 29: Leistungsteil
- 30: Last
- 31: Regler
- 32: Schalter (bidirektional)
- 33: Spannungsmesseinrichtung
- 34: Strommesseinrichtung
- 35: Steuerleitung
- 36,..,38: Signalleitung
- 39: Regelung
- 40,41: Regelventil
- 42: verstellbare Verdichterleitschaufeln
- 43,..,47: Messwertaufnehmer
- 48: Messleitung (Drehzahl)
- 49: Netzfrequenzaufnehmer
- 50: Kühlluftversorgung
- 51: Generatorsolldrehzahl
- G1,..,G6: Phase (Generator)
- L1,..,L3: Phase (Last)
- Tₕₒₜ: Heissgastemperatur vor Turbineneintritt der Gasturbine
- Pᵣₑₗ: relative Leistung der Gasturbine
- n_{mech}: normierte mechanische Drehzahl der Gasturbine
- F: Netzfrequenz in Hz
- f_{G}: normierte Netzfrequenz
- P_{dyn}: dynamische Leistung des Gasturbinenwellenstranges, die aufgrund des Drehzahlgradienten an das Netz abgegeben wird
- T₀: Zeitpunkt: Start Anhebung der Drehzahl der Gasturbine
- T₁: Zeitpunkt: Drehzahl der Gasturbine angehoben
- T₂: Zeitpunkt: Begin der Netzfrequenzabsenkung
- T₃: Zeitpunkt: Netzfrequenz abgesenkt
- T₄: Zeitpunkt: GT stabilisiert

## Patentansprüche

1. Verfahren zum Betrieb einer Kraftwerksanlage (10) mit einem Turbinenstrang (11) aus einer Gasturbine (12) und einem von der Gasturbine (12) direkt angetriebenen, Wechselstrom mit einer Betriebsfrequenz erzeugenden Generator (18), dessen Ausgang mit einem Netz (21) mit vorgegebener Netzfrequenz (F) in Verbindung steht, wobei zwischen dem Generator (18) und dem Netz (21) eine elektronische Entkopplungsvorrichtung (27) angeordnet ist, welche die Betriebsfrequenz von der Netzfrequenz (F) entkoppelt, **dadurch gekennzeichnet, dass** beim Auftreten kurzzeitiger Über- oder Unterfrequenz-Ereignisse im Netz (21) durch Regelung der mechanischen Drehzahl (n_{mech}) der Gasturbine (12), Rotationsenergie aus dem Turbinenstrang (11) zur Frequenzstützung freigesetzt oder aufgenommen wird.

2. Verfahren nach Anspruch 1, **dadurch gekennzeichnet, dass** bei Unterfrequenz des Netzes (21) die mechanische Drehzahl (n_{mech}) der Gasturbine (12) stärker oder schwächer abgesenkt wird, als die Netzfrequenz.

3. Verfahren nach Anspruch 1, **dadurch gekennzeichnet, dass** bei Überfrequenz des Netzes (21) die mechanische Drehzahl (n_{mech}) der Gasturbine (12) stärker oder schwächer angehoben wird, als die Netzfrequenz (F).

4. Verfahren nach einem der Ansprüche 1 bis 3, **dadurch gekennzeichnet, dass** eine Gasturbine (12) mit einer Leistung grösser 100 MW und als elektronische Entkopplungsvorrichtung (27) ein Frequenzumrichter in Form eines Matrixumrichters verwendet werden.

5. Verfahren nach einem der Ansprüche 1 bis 4, **dadurch gekennzeichnet, dass** die Betriebsfrequenz sich deutlich von der Netzfrequenz bzw. zweiten Betriebsfrequenz unterscheidet.

6. Verfahren nach Anspruch 5, **dadurch gekennzeichnet, dass** der Matrixumrichter eine Mehrzahl von in einer (m x n)-Matrix angeordneten, steuerbaren bidirektionalen Schaltern (32) umfasst, welche von einem Regler (31) gesteuert m Eingänge wahlweise mit n Ausgängen verbinden, wobei m grösser n ist, und wobei erste Mittel (34) zur Bestimmung der Vorzeichen der Ströme in den Eingängen und zweite Mittel (33) zur Bestimmung der Vorzeichen der Spannungen zwischen den Eingängen vorgesehen sind, und wobei die ersten und zweiten Mittel (34 bzw. 33) mit dem Regler (31) durch Signalleitungen (38) verbunden sind.

7. Verfahren nach einem der Ansprüche 1 bis 6, **dadurch gekennzeichnet, dass** die von der Netzfrequenz entkoppelte Gasturbine (12) mit erhöhter mechanischer Drehzahl fährt, um im Falle eines Unterfrequenz-Ereignisses eine zusätzliche kinetische Energie aus dem Wellenstrang (19) als elektrische Leistung an das Netz (21) abgeben zu können.

8. Verfahren nach einem der Ansprüche 1 bis 6, **dadurch gekennzeichnet, dass** die von der Netzfrequenz entkoppelte Gasturbine (12) mit reduzierter mechanischer Drehzahl fährt, um im Falle eines Überfrequenz-Ereignisses Energie aus dem Netz (21) aufnehmen zu können.

9. Verfahren nach einem der Ansprüche 1 bis 8, **dadurch gekennzeichnet, dass** der Drehzahlgradient geregelt wird, um eine vorgegebene kinetische Leistung aus dem Wellenstrang (19) zu entnehmen und als elektrische Leistung in das Netz (21) einzuspeisen.

10. Verfahren nach Anspruch 1, **dadurch gekennzeichnet, dass** die Drehzahl des Wellenstrangs (19) in einem festen Verhältnis zu Änderungen der Netzfrequenz geregelt wird.

11. Verfahren nach Anspruch 1, **dadurch gekennzeichnet, dass** bei Frequenzänderungen des Netzes (21) die mechanische Drehzahl (n_{mech}) der Gasturbine (12) bis zu einem ersten Limit mit einem ersten Verhältnis zur Änderung der Netzfrequenz (F) geändert wird, ab dem ersten Limit bis zu einem zweiten Limit mit einem zweiten Verhältnis zur Änderung der Netzfrequenz (F) geändert wird und ab dem zweiten Limit unabhängig von der Netzfrequenz (F) konstant gehalten wird.

12. Verfahren nach Anspruch 10, **dadurch gekennzeichnet, dass** mindestens eines der Limite eine Funktion der aerodynamischen Drehzahl der Gasturbine (12) ist.

13. Verfahren nach einem der Ansprüche 1 bis 12, **dadurch gekennzeichnet, dass** der Gradient der mechanischen Drehzahländerung der Gasturbine (12) limitiert ist.

14. Verfahren nach einem der Ansprüche 1 bis 13, **dadurch gekennzeichnet, dass** die mechanische Drehzahl (n_{mech}) der Gasturbine nach einem Unter- oder Überfrequenzereignis mit einem kleinen Drehzahlgradienten geregelt wieder zu dem optimalen Betriebspunkt gefahren wird.

15. Verfahren nach einem der Ansprüche 1 bis 13, **dadurch gekennzeichnet, dass** abhängig von dem Gradienten der mechanischen Drehzahländerung der Gasturbine (12) eine Vorsteuerung des mindestens einen Brennstoffregelventils erfolgt.

16. Verfahren nach einem der Ansprüche 1 bis 15, **dadurch gekennzeichnet, dass** bei Unter- oder Überfrequenzereignissen des Netzes (21) die Regelung (39) erst reagiert, wenn die Frequenzänderungen ein Totband, dass um die Netzfrequenz gelegt ist, überschreitet.

17. Verfahren nach einem der Ansprüche 1 bis 15, **dadurch gekennzeichnet, dass** bei Unter- oder Überfrequenzereignissen des Netzes (21) die Regelung (39) erst reagiert, wenn die Frequenzänderungen relativ zu einem gleitenden Mittelwert der Netzfrequenz grösser wird, als einem vorgegebenes Totband.

## Claims

1. Method for operation of a power station (10) having a turbine section (11) comprising a gas turbine (12) and a generator (18) which is driven directly by the gas turbine (12) and produces alternating current at an operating frequency, and whose output is connected to a grid system (21) with a predetermined grid frequency (F), wherein an electronic decoupling apparatus (27) is arranged between the generator (18) and the grid (21) and decouples the operating frequency from the grid frequency (F), **characterized in that**, when brief overfrequency or underfrequency events occur in the grid (21) rotation energy is released or absorbed from the turbine section (11) for frequency support, by closed-loop control of the mechanical rotation speed (n_{mech}) of the gas turbine (12).

2. Method according to Claim 1, **characterized in that**, in the event of a grid (21) underfrequency, the mechanical rotation speed (n_{mech}) of the gas turbine (12) is reduced to a greater or lesser extent than the grid frequency.

3. Method according to Claim 1, **characterized in that** in the event of a grid (21) overfrequency, the mechanical rotation speed (n_{mech}) of the gas turbine (12) is increased to a greater or lesser extent than the grid frequency (F).

4. Method according to one of Claims 1 to 3, **characterized in that** a gas turbine (12) with a rating of more than 100 MW is used, and a frequency converter in the form of a matrix converter is used as the electronic decoupling apparatus (27).

5. Method according to one of Claims 1 to 4, **characterized in that** the operating frequency differs considerably from the grid frequency and the second operating frequency.

6. Method according to Claim 5, **characterized in that** the matrix converter comprises a plurality of controllable bidirectional switches (32), which are arranged in an (m x n) matrix and selectively connect m inputs to n outputs, controlled by a controller (31) where m is greater than n, and where first means (34) are provided for determining the mathematical signs of the currents in the inputs, and second means (33) are provided for determining the mathematical signs of the voltages between the inputs, and wherein the first and second means (34 and 33, respectively) are connected to the regulator (31) by signal lines (38).

7. Method according to one of Claims 1 to 6, **characterized in that** the gas turbine (12), which is decoupled from the grid frequency, is operated at an increased mechanical rotation speed in order to allow additional kinetic energy to be emitted from the shaft section (19) as electrical power to the grid (21) in the event of an underfrequency event.

8. Method according to one of Claims 1 to 6, **characterized in that** the gas turbine (12) which is decoupled from the grid frequency is operated at a reduced mechanical rotation speed in order to allow energy to be absorbed from the grid (21) in the event of an overfrequency event.

9. Method according to one of Claims 1 to 8, **characterized in that** the rotation-speed gradient is regulated in order to absorb a predetermined output of kinetic power from the shaft section (19), and to feed this into the grid (21) as electrical power.

10. Method according to Claim 1, **characterized in that** the rotation speed of the shaft section (19) is regulated in a fixed ratio with respect to changes in the grid frequency.

11. Method according to Claim 1, **characterized in that**, when frequency changes occur in the grid (21), the mechanical rotation speed (n_{mech}) of the gas turbine (12) is changed as far as a first limit with a first ratio with respect to the change in the grid frequency (F), is changed with a second ratio with respect to the change in the grid frequency (F) between the first limit and a second limit, and is kept constant irrespective of the grid frequency (F) beyond the second limit.

12. Method according to Claim 10, **characterized in that** at least one of the limits is a function of the aerodynamic rotation speed of the gas turbine (12).

13. Method according to one of Claims 1 to 12, **characterized in that** the gradient of the mechanical rotation-speed change of the gas turbine (12) is limited.

14. Method according to one of claims 1 to 13, **characterized in that**, after an underfrequency or overfrequency event, the mechanical rotation speed (n_{mech}) of the gas turbine is driven in a controlled way with a small rotational speed gradient back to an optimum operating point..

15. Method according to one of Claims 1 to 13, **characterized in that** a feed forward control is provided for the at least one fuel control valve, as a function of the gradient of the mechanical rotation-speed change of the gas turbine (12).

16. Method according to one of Claims 1 to 15, **characterized in that**, in the event of underfrequency or overfrequency events in the grid (21), the closed-loop control system (39) reacts only if the frequency changes go beyond a dead band around the grid frequency.

17. Method according to one of claims 1 to 15, **characterized in that**, in the event of underfrequency or overfrequency events in the grid (21), the closed-loop control system (39) reacts if the frequency changes relative to a sliding mean value of the grid frequency are greater than a predetermined dead band.

## Revendications

1. Procédé de conduite d'une centrale électrique (10) qui présente une ligne de turbine (11) constituée d'une turbine à gaz (12) et d'un générateur (18) entraîné directement par la turbine à gaz (12), produisant du courant alternatif à une fréquence de fonctionnement et dont la sortie est raccordée à un réseau (21) à fréquence (F) prédéterminée,
un dispositif électronique de découplage (27) étant disposé entre le générateur (18) et le réseau (21) et découplant la fréquence de fonctionnement de la fréquence (F) du réseau,
**caractérisé en ce que**
au cas où surviennent des événements de sur-fréquence ou de sous-fréquence de courte durée sur le réseau (21), de l'énergie de rotation de la ligne de turbine (11) est libérée ou absorbée pour soutenir la fréquence par régulation de la vitesse de rotation mécanique (n_{mech}) de la turbine à gaz (12).

2. Procédé selon la revendication 1, **caractérisé en ce que** lorsque le réseau (21) est en sous-fréquence, la vitesse de rotation mécanique (n_{mech}) de la turbine à gaz (12) est abaissée plus fort ou moins fort que la fréquence du réseau.

3. Procédé selon la revendication 1, **caractérisé en ce qu'**en cas de sur-fréquence du réseau (21), la vitesse de rotation mécanique (n_{mech}) de la turbine à gaz (12) est relevée plus fort ou moins fort que la fréquence (F) du réseau.

4. Procédé selon l'une des revendications 1 à 3, **caractérisé en ce qu'**il utilise une turbine à gaz (12) dont la puissance est supérieure à 100 MW et comme dispositif électronique de découplage (27) un convertisseur de fréquences qui présente la forme d'un convertisseur matriciel.

5. Procédé selon l'une des revendications 1 à 4, **caractérisé en ce que** la fréquence de fonctionnement est nettement différente de la fréquence du réseau ou d'une deuxième fréquence de fonctionnement.

6. Procédé selon la revendication 5, **caractérisé en ce que** le convertisseur matriciel comporte plusieurs commutateurs (32) bidirectionnels asservis disposés en une matrice (m x n), qui relie sélectivement m entrées à n sorties sous la commande d'un régulateur (31), m étant supérieur à n, des premiers moyens (34) de détermination du signe des courants dans les entrées et des deuxièmes moyens (33) de détermination du signe des tensions entre les entrées étant prévus, les premiers et les deuxièmes moyens (34 ou 33) étant reliés au régulateur (31) par des conducteurs de signalisation (38).

7. Procédé selon l'une des revendications 1 à 6, **caractérisé en ce que** la turbine à gaz (12) découplée de la fréquence du réseau tourne à une vitesse de rotation mécanique plus élevée pour, en cas d'événement de sous-fréquence, pouvoir délivrer une énergie cinétique supplémentaire au réseau (21) sous la forme d'une puissance électrique à partir de la ligne d'arbre (19).

8. Procédé selon l'une des revendications 1 à 6, **caractérisé en ce que** la turbine à gaz (12) découplée de la fréquence du réseau tourne à une vitesse de rotation mécanique plus basse pour, en cas d'événement de sur-fréquence, pouvoir reprendre de l'énergie sur le réseau (21).

9. Procédé selon l'une des revendications 1 à 8, **caractérisé en ce que** le gradient de vitesse de rotation est régulé pour prélever une énergie cinétique prédéterminée de la ligne d'arbre (19) et l'injecter sur le réseau (21) sous la forme de puissance électrique.

10. Procédé selon la revendication 1, **caractérisé en ce que** la vitesse de rotation de la ligne d'arbre (19) est régulée dans un rapport fixe par rapport aux modifications de la fréquence du réseau.

11. Procédé selon la revendication 1, **caractérisé en ce qu'**en cas de modification de la fréquence du réseau (21), la vitesse de rotation mécanique (n_{mech}) de la turbine à gaz (12) est modifiée jusqu'à une première limite dans un premier rapport à la modification de la fréquence (F) du réseau, est modifiée à un deuxième rapport à la modification de la fréquence (F) du réseau entre la première limite et une deuxième limite et est maintenue constante et indépendante de la fréquence (F) du réseau à partir de la deuxième limite.

12. Procédé selon la revendication 10, **caractérisé en ce qu'**au moins l'une des limites est une fonction de la vitesse de rotation aérodynamique de la turbine à gaz (12).

13. Procédé selon l'une des revendications 1 à 12, **caractérisé en ce que** le gradient de la modification de la vitesse de rotation mécanique de la turbine à gaz (12) est limité.

14. Procédé selon l'une des revendications 1 à 13, **caractérisé en ce qu'**après un événement de sur-fréquence ou de sous-fréquence, la vitesse de rotation mécanique (n_{mech}) de la turbine à gaz est régulée à un petit gradient de vitesse de rotation pour être ramenée au point de fonctionnement optimum.

15. Procédé selon l'une des revendications 1 à 13, **caractérisé en ce qu'**une pré-commande de la ou des soupapes de régulation de combustible a lieu en fonction du gradient de variation de la vitesse de rotation mécanique de la turbine à gaz (12).

16. Procédé selon l'une des revendications 1 à 15, **caractérisé en ce qu'**en cas d'événement de sous-fréquence ou de sur-fréquence sur le réseau (21), la régulation (39) ne réagit qu'après que les modifications de fréquence ont dépassé une bande morte disposée autour de la fréquence du réseau.

17. Procédé selon l'une des revendications 1 à 15, **caractérisé en ce qu'**en cas d'événement de sous-fréquence ou de sur-fréquence sur le réseau (21), la régulation (39) ne réagit qu'après que les modifications de fréquence par rapport à une valeur moyenne glissante de la fréquence du réseau ont dépassé une bande morte prédéterminée.
